(19) **Europäisches Patentamt / European Patent Office / Office européen des brevets**

(11) **EP 2 758 257 B1**

(12) **FASCICULE DE BREVET EUROPEEN**

(45) Date de publication et mention de la délivrance du brevet:
**18.11.2015 Bulletin 2015/47**

(21) Numéro de dépôt: **12773049.7**

(22) Date de dépôt: **17.09.2012**

(51) Int Cl.:
*B60C 23/04* (2006.01)   *B60C 23/06* (2006.01)
*B60T 8/172* (2006.01)   *B60T 8/175* (2006.01)

(86) Numéro de dépôt international:
**PCT/FR2012/052076**

(87) Numéro de publication internationale:
**WO 2013/041802 (28.03.2013 Gazette 2013/13)**

(54) **PROCEDE D'ESTIMATION DE LA RESISTANCE AU ROULEMENT D'UNE ROUE DE VEHICULE**

VERFAHREN ZUR SCHÄTZUNG DES ROLLWIDERSTANDES EINES FAHRZEUGRADES

METHOD FOR ESTIMATING THE ROLLING RESISTANCE OF A VEHICLE WHEEL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.09.2011 FR 1158453**

(43) Date de publication de la demande:
**30.07.2014 Bulletin 2014/31**

(73) Titulaire: **Renault S.A.S.**
**92100 Boulogne-Billancourt (FR)**

(72) Inventeurs:
• **EL TANNOURY, Charbel**
  **78000 Versailles (FR)**
• **PITA-GIL, Guillermo**
  **75017 Paris (FR)**
• **ROMANI, Nicolas**
  **75016 Paris (FR)**
• **PLESTAN, Franck**
  **44321 Nantes Cedex 3 (FR)**
• **MOUSSAOUI, Saïd**
  **44321 Nantes Cedex 3 (FR)**

(56) Documents cités:
**EP-A1- 0 699 546      EP-A2- 1 037 030**
**US-A1- 2004 225 423   US-A1- 2007 222 285**
**US-A1- 2009 210 128**

**Description**

La présente invention se rapporte à la détection et à la surveillance de l'état de gonflage du pneumatique d'une roue d'un véhicule, et plus particulièrement d'un véhicule automobile.

Il est en effet crucial pour la sécurité des passagers que tout véhicule dispose de roues dont la pression de gonflage soit suffisante pour assurer un comportement adéquat du véhicule quant à sa stabilité directionnelle, sa maniabilité et son confort. Il est par ailleurs connu qu'une pression insuffisante des pneumatiques génère une surconsommation.

Une information importante liée au contact entre la roue et la chaussée est la force de résistance au roulement dont la variation est fortement indicative de l'état du véhicule en termes de charge et de pression de gonflage des pneumatiques.

Afin d'améliorer les stratégies de commande du véhicule et les outils de diagnostic des pneumatiques, la présente invention se propose d'estimer la résistance au roulement d'une roue et d'en déduire l'état de gonflage des pneumatiques.

Il est connu, par le document JP2010/0249527, une estimation de la résistance au roulement d'un pneumatique pris isolément, dans le but de déterminer ses caractéristiques. Cette estimation est basée sur un modèle d'éléments finis, en statique, et ne s'applique pas à un véhicule roulant sur une chaussée.

Le document US 2004/0225423 A1 divulgue un système de surveillance de l'état de gonflage du pneumatique incluant un modèle de résistance au roulement du pneumatique en accord avec les preambules des revendications 1 et 7.

Il est également connu, par les documents US4489598 et US2008/0115563, des bancs de mesure équipés de capteurs permettant de mesurer les forces de résistances tangentielles au roulement. Un tel équipement ne permet pas une mesure de la résistance en roulement lors de l'utilisation du véhicule, et par conséquent, ne permet pas une surveillance de la pression des pneumatiques en roulage.

La présente invention se propose de déterminer, en temps réel, la résistance au roulement d'une roue d'un véhicule se déplaçant sur une chaussée, à partir de données déjà présentes sur la plupart des véhicules, notamment les véhicules équipés d'un dispositif ABS (AntiBlockierSystem), par un procédé robuste et fiable. La présente invention vise également l'estimation et la surveillance de la pression d'un pneumatique équipant la roue d'un véhicule par l'intermédiaire de l'estimation de la résistance au roulement de ladite roue.

La présente invention est atteinte à l'aide d'une méthode d'estimation de la résistance au roulement d'une roue d'un véhicule en mouvement, ledit véhicule étant muni d'au moins deux roues équipées de pneumatiques, la méthode comprenant :

- la mesure ou l'estimation de la valeur de la vitesse angulaire de rotation d'au moins une roue,
- la mesure ou l'estimation de la valeur du couple appliqué à ladite roue,

caractérisée par le fait que la méthode utilise un observateur de la dynamique de la roue basé sur la théorie des modes glissants dont les signaux d'entrée sont la valeur de la vitesse angulaire de roue ainsi que la valeur du couple appliqué à la roue.

Une telle méthode permet ainsi, à partir de deux signaux estimés ou mesurés, d'obtenir une estimation de la résistance au roulement de chaque roue du véhicule, par l'utilisation d'un observateur fondé sur la théorie des modes glissants, qui permet notamment de conférer à cette méthode une certaine robustesse face aux incertitudes et perturbations.

Par ailleurs, cette théorie permet également une convergence rapide.

Avantageusement, cette méthode d'estimation de la résistance au roulement selon la revendication précédente, permet d'estimer la vitesse longitudinale de la roue.

Selon l'invention, l'observateur utilise les équations suivantes appliquées à la roue :

$$J\dot{\Omega} = \tau - RF_x - C_f\Omega,$$

$$M\dot{v}_x = F_x - F_d - F_r,$$

où $J$ et $M$ sont respectivement l'inertie de la roue et la masse d'un quart de voiture comprenant la carrosserie et la roue, $R$ est le rayon effectif de roue, $C_f$ est le coefficient de frottement visqueux de la roue, $F_x$ est la force de traction, $F_d$ est la force aérodynamique, et $F_r$ est la force de résistance au roulement.

Par ailleurs, la force de traction est définie par la relation $F_x = Mg\mu$, où $\mu$ est le coefficient d'adhérence de la roue, ce coefficient étant approximé par sa relation au pseudo-glissement $\lambda$ de la roue définie par :

$$\mu(\lambda) = 2\mu_0 \frac{\lambda_0 \lambda}{\lambda_0^2 + \lambda^2}, \text{ avec } \lambda = 1 - \frac{v_x}{R\Omega}$$

où $\lambda_o$ est le pseudo-glissement optimal correspondant à l'adhérence maximale $\mu_o$.

Cette relation entre le coefficient d'adhérence et le pseudo-glissement représente une approximation plus réaliste que les relations plus couramment utilisées, où la force de traction est exprimée comme linéairement dépendante du pseudo glissement.

Selon une simplification de calcul avantageuse, la variation de la résistance au roulement est lente selon la relation :

$$\dot{F}_r = \eta, \text{ avec } |\eta| < |\eta_0|,$$

ce qui permet d'amener des simplifications au niveau de l'observateur.

Avantageusement, la valeur de la vitesse angulaire de rotation de la roue est issue de capteurs du système de freinage anti-blocage du véhicule, ce qui évite un dispositif spécifique de mesure de cette vitesse.

La présente invention vise également un véhicule automobile comportant un dispositif de surveillance de la pression des pneumatiques équipant les roues du véhicule, utilisant la variation de la résistance au roulement desdites roues comme indicateur de la variation de pression, le véhicule étant équipé de moyens de mesure ou d'estimation de la valeur de la vitesse angulaire de rotation d'au moins une roue, ainsi que de moyens de mesure ou d'estimation de la valeur du couple appliqué à ladite roue, la résistance au roulement étant estimée, en temps réel, à l'aide d'une méthode comprenant :

- la mesure ou l'estimation de la valeur de la vitesse angulaire de rotation d'au moins une roue, par les moyens de mesure ou d'estimation de la valeur de la vitesse angulaire de rotation de roue,
- la mesure ou l'estimation de la valeur du couple appliqué à ladite roue, par les moyens de mesure ou d'estimation de la valeur du couple appliqué à la roue,

caractérisé en ce que le véhicule comporte des moyens de traitement des signaux par un observateur de la dynamique de la roue basé sur la théorie des modes glissants dont les signaux d'entrée sont la valeur de la vitesse angulaire de roue ainsi que la valeur du couple appliqué à la roue.

Avantageusement, le véhicule comporte des moyens d'enregistrement et de comparaison de la résistance au roulement des roues du véhicule.

La présente invention sera mieux comprise à l'aide de la description qui va suivre, en référence aux figures annexées, parmi lesquelles :

la figure 1 est une vue schématique d'une roue et des forces s'appliquant sur cette roue dans un véhicule en mouvement,
les figures 2 à 4 montrent le résultat de différentes simulations à l'aide de la méthode selon l'invention.

La présente invention propose l'estimation de la force de résistance au roulement utilisant seulement les informations de couple moteur et vitesses angulaires fournies avantageusement par les codeurs ABS

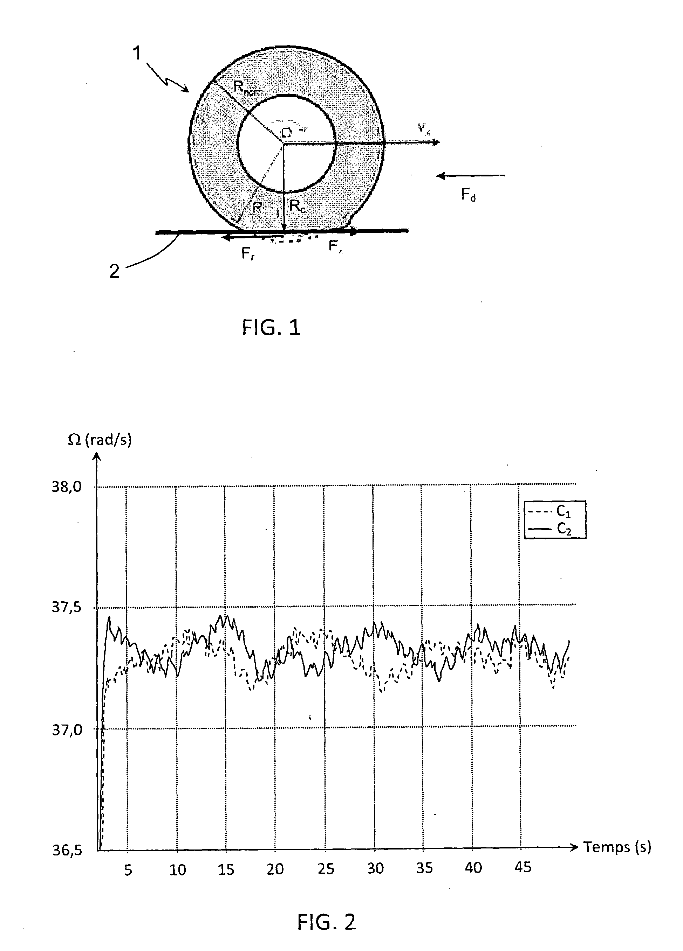

La figure 1 représente l'état d'une roue 1 équipant un véhicule (non représenté) reposant sur un sol 2. Une telle roue n'est donc pas prise isolément, et se trouve ainsi chargée approximativement du poids total du véhicule divisé par le nombre de roues assurant la liaison entre le véhicule et le sol. Dès lors, le rayon des roues équipées de pneumatiques diffère du rayon nominal, par l'effet du poids du véhicule, le rayon nominal $R_{nom}$ correspondant au diamètre extérieur des roues prises séparément, hors du montage sur véhicule.

On définit ainsi un rayon sous charge $R_c$ qui correspond à la distance entre l'axe de rotation de la roue et le sol, ainsi qu'un rayon dynamique $\boldsymbol{R}$ qui correspond à la distance parcourue pour un tour de roue divisée par $2\pi$.

Le modèle représentant la dynamique de la roue est basé sur l'application de la deuxième loi de Newton aux forces agissant sur la roue pendant une phase d'accélération. Ceci permet d'établir les équations principales des dynamiques longitudinale et rotationnelle à la roue :

$$J\dot{\Omega} = \tau - RF_x - C_f\Omega,$$

$$M\dot{v}_x = F_x - F_d - F_r,$$

où $\Omega$ est la vitesse angulaire de roue, R le rayon dynamique, $v_x$ la vitesse linéaire du véhicule, $C_f$ le coefficient de frottement visqueux de la roue, $J$ et $M$ respectivement l'inertie de la roue et la masse d'un quart de voiture comprenant la carrosserie et la roue, étant supposé, selon l'exemple proposé, que le véhicule dispose de quatre roues en contact avec le sol.

En plus du couple $\tau$ à la roue, les forces principales agissant sur la roue sont la force de traction $F_x$, la force aérodynamique $F_d$ et la résistance au roulement $F_r$, telles que représentées figure 1, et qui sont données par les formules suivantes :

$$F_d(v_x) = \frac{1}{2}\rho A_d C_d v_x^2,$$

$$F_x(\lambda) = Mg\mu(\lambda),$$

où $C_d$ est le coefficient de pénétration dans l'air, $\rho$ la masse volumique de l'air et $A_d$ la surface de la zone frontale du véhicule. Le paramètre $\mu(\lambda)$ est le coefficient d'adhérence de la roue dépendant du pseudo-glissement $\lambda$ de la roue. Ce coefficient est défini par la relation suivante :

$$\lambda = \frac{R\Omega - v_x}{R\Omega} = 1 - \frac{v_x}{R\Omega}.$$

La relation entre $\mu$ et $\lambda$ est approximée par la fonction suivante :

$$\mu(\lambda) = 2\mu_0 \frac{\lambda_0\lambda}{\lambda_0^2 + \lambda^2},$$

où $\lambda_0$ est le pseudo-glissement optimal, correspondant à l'adhérence maximale $\mu(\lambda_0) = \mu_0$. Cette relation est plus précise et plus proche de la réalité qu'une variation linéaire entre la force de traction $F_x$ et le pseudo-glissement $\lambda$, tel qu'il est fréquemment rencontré.

Le rayon effectif $R$ est supposé constant et la résistance au roulement, dont l'estimation est recherchée, est supposée présenter une variation lente selon

$$\dot{F}_r = \eta, \text{ avec } \eta \text{ borné selon la relation } |\eta| < |\eta_0|.$$

avec $\eta$ borné selon la relation $|\eta| < |\eta_0|$.

Selon l'invention, un observateur utilisant uniquement la valeur mesurée de la vitesse angulaire de la roue et le couple appliqué sur ladite roue est proposé. Une telle solution permet d'estimer la vitesse du véhicule et la résistance au roulement en supposant un rayon constant.

L'observateur fondé sur la théorie des modes glissants d'ordre supérieur doit être du troisième ordre. Les caractéristiques principales de ce genre d'observateurs sont la robustesse par rapport aux incertitudes et perturbations, et la convergence en temps fini. En outre, ils sont applicables à une classe très large de systèmes observables.

Ce choix de stratégie d'observation a été fait parce que la dynamique de la résistance au roulement n'est pas connue à priori et peut être considérée comme une incertitude bornée.

Afin de concevoir l'estimateur, un modèle représentant la dynamique de la roue est nécessaire.

Les valeurs que l'on souhaite estimer sont donc la vitesse de rotation angulaire des roues $\Omega$, la vitesse d'avancement $v_x$, ainsi que la résistance au roulement $F_r$.

La représentation d'état se note alors $x = [x_1\ x_2\ x_3]T = [\Omega\ v_x\ F_d]^T$ avec l'entrée de commande $u = \tau$, ce qui permet alors, compte tenu des équations précédentes, d'exprimer x par la relation :

$$\dot{x} = \begin{bmatrix} -\dfrac{1}{J}\left(RF_x(x) + C_f x_1\right) \\ \dfrac{1}{M}\left(F_x(x) - F_d(x) - x_3\right) \\ \eta \end{bmatrix} + \begin{bmatrix} \dfrac{1}{J} \\ 0 \\ 0 \end{bmatrix} u.$$

Par ailleurs, selon l'invention, la valeur de la vitesse de rotation $\Omega$ est connue, de sorte que le terme $-\dfrac{C_f}{J}x_1 + \dfrac{1}{J}u$ ne dépend que de variables connues. Or on sait que les propriétés d'observabilité ne sont pas modifiées par la prise en compte ou non de ce terme, qui sera donc ignoré par la suite.

De plus, on choisit pour l'observateur, la valeur $\eta_{obs} = 0$, dès lors que cette dynamique de la force de résistance au roulement est lente et inconnue pour l'observateur. Ainsi, la conception de l'observateur est faite sur le système simplifié :

$$\dot{x} = \begin{bmatrix} -\dfrac{1}{J}RF_x(x) \\ \dfrac{1}{M}\left(F_x(x) - F_d(x) - x_3\right) \\ 0 \end{bmatrix} = f_{id}(x).$$

Compte tenu des équations définies précédemment, la force $F_x(x)$ s'exprime par la relation :

$$F_x = 2\mu_0 \frac{\lambda_0\left(1 - \dfrac{x_2}{Rx_1}\right)}{\lambda_0^2 + \left(1 - \dfrac{x_2}{Rx_1}\right)^2} Mg.$$

On définit ensuite la transformation suivante :

$$\psi(x) = \begin{bmatrix} y \\ \dot{y} \\ \ddot{y} \end{bmatrix} = \begin{bmatrix} x_1 \\ -\dfrac{1}{J}RF_x(x) \\ -\dfrac{1}{J}\left[\dfrac{dF_x}{dx}\right]^T \dot{x} \end{bmatrix}.$$

avec $y = \Omega = x_1$ la sortie mesurée.

Si le déterminant du jacobien de cette transformation est différent de zéro, la dynamique des variables d'état estimées s'écrit, selon la technique des modes glissants d'ordre trois :

$$\dot{\hat{x}} = f_{id}(\hat{x}, y) + \chi(y, u) + \left[\frac{\partial \psi}{\partial x}\right]^{-1} \cdot \begin{bmatrix} \gamma_1 \\ \gamma_2 \\ \gamma_3 \end{bmatrix},$$

avec

$$\gamma_1 = 2 \ L^{1/3} \left| y - \hat{x}_1 \right|^{2/3} sign(y - \hat{x}_1),$$

$$\gamma_2 = 1.5 \ L^{1/2} \left| \gamma_1 \right|^{1/2} sign(\gamma_1),$$

$$\gamma_3 = 1.1 \ L \ sign(\gamma_2),$$

où L est un paramètre de réglage de l'observateur. La prise en compte du signe permet que les écarts entre les variables estimées et mesurées tendent vers zéro.

Afin de vérifier si l'observateur proposé présente une convergence et des estimations correctes des variables envisagées qui sont la résistance au roulement et la vitesse longitudinale, des signaux réels de vitesse angulaire et de couple ont été acquis pour deux niveaux de gonflage d'une roue.

Les paramètres de l'observation sont choisis pour être aussi proches que possible des valeurs réelles. Ainsi, les différentes valeurs des paramètres nécessaires sont : $J$ = 1,672 kg.m$^2$, $R$ = 0,305 m, $M$ = 607,5 kg, $A_d$ = 0,815 m$^2$, $\rho$ = 1,205 kg.m$^{-3}$ , g = 9,807 m.s$^{-2}$, $C_f$ = 0,08 kg.m$^2$.s$^{-1}$, $C_d$ = 0,3125, $\mu_o$ = 0,9 et $\lambda_o$ = 0,15.

Le paramètre L a été réglé égal à 1.

Les valeurs initiales $\hat{x}(0)$ sont choisies selon

$$\hat{x}(0) = \begin{bmatrix} 15 / 0.29 \\ 15 \\ 74 \end{bmatrix}.$$

Pour cette expérience, il a été choisi une vitesse longitudinale de véhicule égale à 40 km/h. Des signaux de vitesses angulaires des roues et de couple moteur ont été acquis avant et après un dégonflage du pneumatique de 20% par rapport à la pression nominale.

Les figures 2 à 4 illustrent respectivement les estimations de la vitesse angulaire de la roue, de la vitesse longitudinale du véhicule, ainsi que la force de résistance au roulement, en fonction du temps de roulage du véhicule. Pour chacune de ces figures, la représentation en traits pointillés, portant l'indice 1, correspond à la situation de gonflage nominale, tandis que la représentation en traits pleins, portant l'indice 2, correspond à la situation où le pneumatique a subi une perte de pression de 20 %.

Sur la figure 2, les courbes $C_1$ et $C_2$ sont très proches l'une de l'autre en valeur moyenne, et l'écart entre les deux courbes est inférieur à 0,5 %. Les valeurs moyennes sont donc difficilement différentiables, ce qui démontre que l'indication de la vitesse de rotation de la roue n'est pas fortement influencée par l'état de pression du pneumatique.

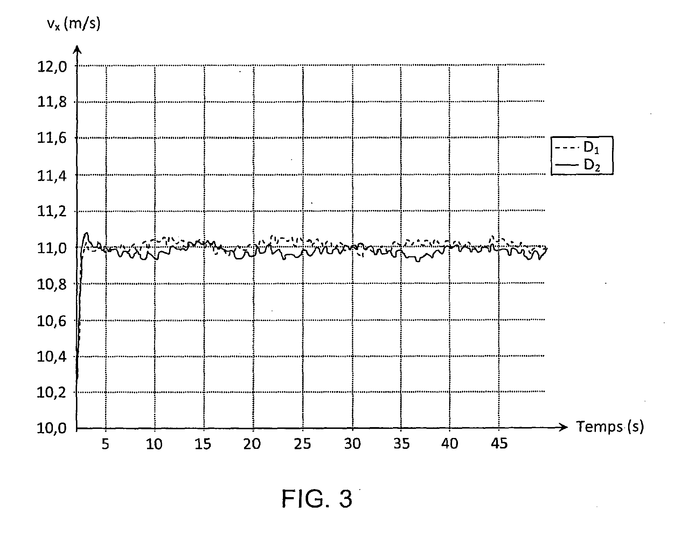

Il en est de même de la figure 3 où la courbe $D_1$ est très voisine de la courbe $D_2$ relatant l'estimation de vitesse après dégonflage du pneumatique, la valeur estimée autour de 11 m/s étant bien conforme à la vitesse de 40 km/h imposée au véhicule.

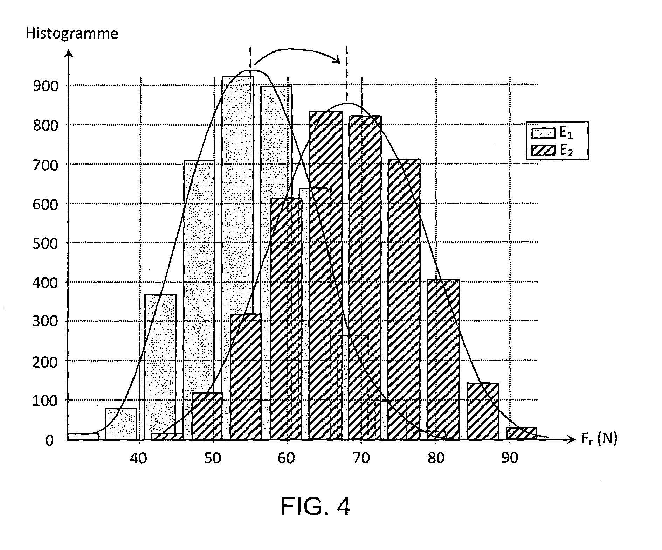

Par contre la figure 4 montre une nette différence entre les histogrammes $E_1$ relatifs à l'estimation de la résistance au roulement avant dégonflage, et $E_2$, relatifs à l'estimation de la résistance au roulement après dégonflage. En représentant les histogrammes sous une forme gaussienne, on note que la valeur maximale pour la courbe $E_1$ est d'environ 55 N, tandis que la valeur maximale pour la courbe $E_2$ est d'environ 68 N, soit un écart supérieur à 20 %, écart pouvant être facilement identifié par des moyens d'enregistrement des données.

Cette nette différence dans les histogrammes de valeur de résistance au roulement, pour une différence de pression de 20 % est observable dans un laps de temps relativement faible, puisque les histogrammes représentés ont été obtenus en 45 secondes de roulage. Ce temps d'observation peut, par ailleurs, être abaissé en diminuant le degré de certitude de l'observation, ou pour une estimation de différence de pression plus importante.

Une telle détection de différence de pression peut alors être communiquée au conducteur par tout dispositif connu : soit un signal sonore ou lumineux, soit une interface spécifique tel un écran de représentation du véhicule au niveau du tableau de bord.

La présente invention permet ainsi une estimation fiable de la résistance au roulement, ainsi que de la vitesse longitudinale du véhicule, cette dernière estimation étant quasiment indépendante de l'état de pression des pneumatiques, tandis que la résistance au roulement est elle, au contraire, fortement dépendante de la pression des pneumatiques, ce qui en fait un moyen intéressant de surveillance de la pression des pneumatiques, et ceci à partir uniquement des valeurs estimées ou mesurées du couple à la roue et de la vitesse de rotation des roues.

## Revendications

1. Méthode d'estimation de la résistance au roulement d'une roue d'un véhicule en mouvement, ledit véhicule étant muni d'au moins deux roues (1) équipées de pneumatiques, la méthode comprenant :

   - la mesure ou l'estimation de la valeur de la vitesse angulaire $\Omega$ de rotation d'au moins une roue (1),
   - la mesure ou l'estimation de la valeur du couple $\tau$ appliqué à ladite roue (1),

   **caractérisée par le fait que** la méthode utilise un observateur de la dynamique de la roue (1) basé sur la théorie des modes glissants dont les signaux d'entrée sont la valeur de la vitesse angulaire $\Omega$ de roue (1) ainsi que la valeur du couple $\tau$ appliqué à la roue (1).

2. Méthode d'estimation de la résistance au roulement selon la revendication précédente, **caractérisé en ce qu'**elle estime également la vitesse longitudinale $v_x$ de la roue (1).

3. Méthode d'estimation de la résistance au roulement selon l'une des revendications précédentes, **caractérisé en ce que** l'observateur utilise les équations suivantes appliquées à la roue (1) :

$$J\dot{\Omega} = \tau - RF_x - C_f\Omega,$$

$$M\dot{v}_x = F_x - F_d - F_r,$$

   où $J$ et $M$ sont respectivement l'inertie et la masse d'un quart de voiture comprenant la carrosserie et la roue (1), R est le rayon effectif de roue, $C_f$ est le coefficient de frottement visqueux de la roue (1), $F_x$ est la force de traction, $F_d$ est la force aérodynamique, et $F_r$ est la force de résistance au roulement.

4. Méthode d'estimation de la résistance au roulement selon la revendication précédente, **caractérisé en ce que** la force de traction est définie par la relation $F_x = Mgu$, où $\mu$ est le coefficient d'adhérence de la roue (1), ce coefficient étant approximé par sa relation au pseudo-glissement $\lambda$ de la roue (1) définie par :

$$\mu(\lambda) = 2\mu_0 \frac{\lambda_0 \lambda}{\lambda_0^2 + \lambda^2}, \text{ avec } \lambda = 1 - \frac{v_x}{R\Omega}$$

   où $\lambda_o$ est le pseudo-glissement optimal correspondant à l'adhérence maximale $\mu_o$.

5. Méthode d'estimation de la résistance au roulement selon l'une des revendications précédentes, **caractérisée en ce que** la variation de la résistance au roulement est lente selon la relation :

$$\dot{F}_r = \eta \,, \text{ avec } |\eta| < |\eta_0|.$$

**6.** Méthode d'estimation de la résistance au roulement selon l'une des revendications précédentes, **caractérisée en ce que** la valeur de la vitesse angulaire de rotation de la roue (1) est issue de capteurs du système de freinage anti-blocage du véhicule.

**7.** Véhicule automobile comportant un dispositif de surveillance de la pression des pneumatiques équipant les roues du véhicule, utilisant la variation de la résistance au roulement desdites roues comme indicateur de la variation de pression, le véhicule étant équipé de moyens de mesure ou d'estimation de la valeur de la vitesse angulaire de rotation d'au moins une roue, ainsi que de moyens de mesure ou d'estimation de la valeur du couple appliqué à ladite roue, la résistance au roulement étant estimée, en temps réel, à l'aide d'une méthode comprenant :

- la mesure ou l'estimation de la valeur de la vitesse angulaire $\Omega$ de rotation d'au moins une roue (1), par les moyens de mesure ou d'estimation de la valeur de la vitesse angulaire de rotation de roue,
- la mesure ou l'estimation de la valeur du couple $\tau$ appliqué à ladite roue (1), par les moyens de mesure ou d'estimation de la valeur du couple appliqué à la roue,

**caractérisé en ce que** le véhicule comporte des moyens de traitement des signaux par un observateur de la dynamique de la roue (1) basé sur la théorie des modes glissants dont les signaux d'entrée sont la valeur de la vitesse angulaire de roue ainsi que la valeur du couple appliqué à la roue.

**8.** Véhicule automobile selon la revendication précédente, **caractérisé en ce qu'**il comporte des moyens d'enregistrement et de comparaison de la résistance au roulement des roues du véhicule.

**Patentansprüche**

**1.** Verfahren zur Schätzung des Rollwiderstandes eines Fahrzeugrades in Bewegung, wobei das Fahrzeug mit mindestens zwei Rädern (1) versehen ist, die mit Reifen ausgestattet sind, wobei das Verfahren Folgendes umfasst:

- Messen oder Schätzen des Werts der Winkelgeschwindigkeit $\Omega$ der Drehung mindestens eines Rades (1),
- Messen oder Schätzen des Werts des Drehmoments $\tau$, das auf das Rad (1) aufgebracht wird,

**dadurch gekennzeichnet, dass** das Verfahren einen Beobachter der Dynamik des Rades (1) auf der Basis der Sliding-Mode-Theorie verwendet, dessen Eingangssignale der Wert der Winkelgeschwindigkeit $\Omega$ des Rades (1) sowie der Wert des Drehmoments $\tau$, das auf das Rad (1) aufgebracht wird, sind.

**2.** Verfahren zur Schätzung des Rollwiderstandes nach dem vorhergehenden Anspruch, **dadurch gekennzeichnet, dass** es auch die Längsgeschwindigkeit $v_x$ des Rades (1) schätzt.

**3.** Verfahren zur Schätzung des Rollwiderstandes nach einem der vorhergehenden Ansprüche, **dadurch gekennzeichnet, dass** der Beobachter die folgenden Gleichungen, angewendet auf das Rad (1), verwendet:

$$J\dot{\Omega} = \tau - RF_x - C_f\Omega,$$

$$M\dot{v}_x = F_x - F_d - F_r,$$

worin $J$ und $M$ jeweils für die Trägheit und die Masse eines Viertels des Wagens, umfassend die Karosserie und das Rad (1), stehen, $R$ für den effektiven Radius des Rades steht, $C_f$ für den Koeffizienten der viskosen Reibung des Rades (1) steht, $F_x$ für die Zugkraft steht, $F_d$ für die aerodynamische Kraft steht und $F_r$ für die Rollwiderstandskraft steht.

4. Verfahren zur Schätzung des Rollwiderstandes nach dem vorhergehenden Anspruch, **dadurch gekennzeichnet, dass** die Zugkraft durch die Beziehung $F_x = Mg\mu$ definiert ist, worin $\mu$ für die Haftreibungszahl des Rades (1) steht, wobei diese Zahl durch ihre Beziehung zum Pseudo-Schlupf A des Rades (1) approximiert wird, der durch:

$$\mu(\lambda) = 2\mu_0 \frac{\lambda_0 \lambda}{\lambda_0^2 + \lambda^2}, \quad \text{mit} \quad \lambda = 1 - \frac{v_x}{R\Omega}$$

definiert ist, worin $\lambda_0$ für den optimalen Pseudo-Schlupf steht, der der maximalen Haftung $\mu_0$ entspricht.

5. Verfahren zur Schätzung des Rollwiderstandes nach einem der vorhergehenden Ansprüche, **dadurch gekennzeichnet, dass** die Änderung des Rollwiderstands langsam ist, gemäß der Beziehung:

$$\dot{F}_r = \eta, \quad \text{mit} \quad |\eta| < |\eta_0|.$$

6. Verfahren zur Schätzung des Rollwiderstandes nach einem der vorhergehenden Ansprüche, **dadurch gekennzeichnet, dass** der Wert der Winkelgeschwindigkeit der Drehung des Rades (1) von den Sensoren des Antiblockiersystems des Fahrzeugs stammt.

7. Kraftfahrzeug, umfassend eine Vorrichtung zur Überwachung des Drucks der Reifen, mit denen die Räder des Fahrzeugs ausgestattet sind, unter Verwendung der Änderung des Rollwiderstands der Räder als Indikator der Druckänderung, wobei das Fahrzeug mit Mitteln zum Messen oder zum Schätzen des Werts der Winkelgeschwindigkeit der Drehung mindestens eines Rades sowie mit Mitteln zum Messen oder zum Schätzen des Werts des Drehmoments, der auf das Rad aufgebracht wird, ausgestattet ist, wobei der Rollwiderstand in Echtzeit mithilfe eines Verfahrens geschätzt wird, das Folgendes umfasst:

   - Messen oder Schätzen des Werts der Winkelgeschwindigkeit $\Omega$ der Drehung mindestens eines Rades (1) mit Mitteln zum Messen oder zum Schätzen des Werts der Winkelgeschwindigkeit der Drehung des Rades,
   - Messen oder Schätzen des Werts des Drehmoments $\tau$, das auf das Rad (1) aufgebracht wird, mit den Mitteln zum Messen oder zum Schätzen des Werts des Drehmoments, der auf das Rad aufgebracht wird,

   **dadurch gekennzeichnet, dass** das Fahrzeug Mittel zur Verarbeitung der Signale durch einen Beobachter der Dynamik des Rades (1) auf der Basis der Sliding-Mode-Theorie umfasst, dessen Eingangssignale der Wert der Winkelgeschwindigkeit des Rades sowie der Wert des Drehmoments, der auf das Rad aufgebracht wird, sind.

8. Kraftfahrzeug nach dem vorhergehenden Anspruch, **dadurch gekennzeichnet, dass** es Mittel zur Aufzeichnung und zum Vergleich des Rollwiderstandes der Räder des Fahrzeugs umfasst.

## Claims

1. Method for estimating the rolling resistance of a wheel of a moving vehicle, said vehicle having at least two wheels (1) fitted with tires, the method comprising the following steps:

   - measuring or estimating the value of the angular velocity $\Omega$ of the rotation of at least one wheel (1),
   - measuring or estimating the value of the torque $\tau$ applied to said wheel (1),

   **characterized in that** the method uses an observer of the dynamic of the wheel (1) that is based on the sliding mode control theory, in which the input signals are the value of the angular velocity $\Omega$ of the wheel (1) and the value of the torque $\tau$ applied to the wheel (1).

2. Method for estimating the rolling resistance according to the preceding claim, **characterized in that** the longitudinal velocity $v_x$ of the wheel (1) is also estimated.

3. Method for estimating the rolling resistance according to either of the preceding claims, **characterized in that** the observer uses the following equations applied to the wheel (1):

$$J\dot{\Omega} = \tau - RF_x - C_f\Omega,$$
$$M\dot{v}_x = F_x - F_d - F_r,$$

where $J$ and $M$ are, respectively, the inertia and the mass of one car quarter comprising the body and the wheel (1), $R$ is the effective radius of the wheel, $C_f$ is the coefficient of viscous friction of the wheel (1), $F_x$ is the tractive force, $F_d$ is the aerodynamic force, and $F_r$ is the rolling resistance force.

4. Method for estimating the rolling resistance according to the preceding claim, **characterized in that** the tractive force is defined by the relationship $F_x = Mg\mu$, where $\mu$ is the coefficient of adhesion of the wheel (1), this coefficient being approximated by the relationship thereof with the pseudo-sliding $\lambda$ of the wheel (1), defined by:

$$\mu(\lambda) = 2\mu_0 \frac{\lambda_0\lambda}{\lambda_0^2 + \lambda^2}, \quad \text{with} \quad \lambda = 1 - \frac{v_x}{R\Omega}$$

where $\lambda_0$ is the optimum pseudo-sliding corresponding to the maximum adhesion $\mu_0$.

5. Method for estimating the rolling resistance according to one of the preceding claims, **characterized in that** the variation of the rolling resistance is slow in accordance with the following relationship:

$$\dot{F}_r = \eta, \quad \text{with} \quad |\eta| < |\eta_0|.$$

6. Method for estimating the rolling resistance according to one of the preceding claims, **characterized in that** the value of the angular velocity of the rotation of the wheel (1) is provided by sensors of the anti-lock braking system of the vehicle.

7. Motor vehicle comprising a device for monitoring the pressure of the tires fitted to the vehicle wheels, using the variation of the rolling resistance of said wheels as an indicator of the variation of pressure, the vehicle being equipped with means for measuring or estimating the value of the angular velocity of the rotation of at least one wheel as well as means for measuring or estimating the value of the torque applied to said wheel, the rolling resistance being estimated in real time with the aid of a method comprising the following steps:

   - measuring or estimating the value of the angular velocity $\Omega$ of the rotation of at least one wheel (1) using the means for measuring or estimating the value of the angular velocity of the rotation of the wheel,
   - measuring or estimating the value of the torque $\tau$ applied to said wheel (1) using the means for measuring or estimating the value of the torque applied to the wheel,

   **characterized in that** the vehicle comprises means for processing signals by an observer of the dynamic of the wheel (1) that is based on the sliding mode control theory, in which the input signals are the value of the angular velocity of the wheel and the value of the torque applied to the wheel.

8. Motor vehicle according to the preceding claim, **characterized in that** it comprises means for recording and comparing the rolling resistance of the vehicle wheels.

FIG. 1

FIG. 2

FIG. 3

FIG. 4

**EP 2 758 257 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- JP 2010249527 A
- US 20040225423 A1
- US 4489598 A
- US 20080115563 A